# FASCICULE DE BREVET EUROPEEN

(11) **EP 2 471 210 B1**
(45) Date de publication et mention de la délivrance du brevet: **17.08.2016**
(21) Numéro de dépôt: 10759979.7
(22) Date de dépôt: 24.08.2010
(51) Int. Cl.: H04L 9/06

(54) **Procédé et dispositif de contre-mesure pour protéger des données circulant dans un composant électronique**
GEGENMESSVERFAHREN UND VORRICHTUNG FÜR DEN SCHUTZ VON ZIRKULIERENDEN DATEN IN EINER ELEKTRISCHEN KOMPONENTE
Counter-measurement method and device for protecting data circulating in an electrical component

(30) Priorité: 27.08.2009 FR 0904072
(43) Date de publication de la demande: 04.07.2012
(73) Titulaire: STMicroelectronics Rousset SAS, 13790 Rousset (FR)
(72) Inventeur: BANCEL, Frédéric, F-13560 Senas (FR)
(74) Mandataire: Casalonga
(86) Numéro de dépôt international: PCT/IB2010/002069
(87) Numéro de publication internationale: WO 2011/024051

(56) Documents cités:
- EP-A1- 1 109 103
- WO-A1-00/19385

## Description

La présente invention concerne un procédé de contremesure pour protéger des données sensibles circulant dans un composant électronique, contre des attaques visant à découvrir ces données. Elle concerne également un dispositif portable à microcircuit tel qu'une carte à puce, mettant en oeuvre le procédé.

Les données sensibles peuvent être notamment des clés de chiffrement ou de déchiffrement, et plus généralement des données cryptographiques utilisées ou élaborées lors de calculs cryptographiques, comme des données intermédiaires de tels calculs, et des identifiants qui doivent être conservés secrets.

Les dispositifs à microcircuit manipulant des données sensibles font parfois l'objet d'attaques visant à déterminer ces données. Parmi les attaques connues, les attaques de type SPA (Simple Power Analysis) ou DPA (Differential Power Analysis) consistent à mesurer des courants et des tensions entrants et sortants dans le microcircuit lors de l'exécution d'un programme par le microcircuit, dans le but d'en déduire des données protégées traitées ou utilisées par le microcircuit. Dans ce même but, les attaques de type EMA (Electromagnetic Analysis) se basent sur l'analyse du rayonnement électromagnétique émis par le microcircuit.

On connaît également les attaques par injection de faute qui consistent à introduire des perturbations dans le microcircuit pendant qu'il exécute des algorithmes sensibles tels que des algorithmes cryptographiques, ou dans le but de déclencher l'exécution d'une routine de téléchargement émettant sur un port les données qu'il mémorise. Une telle perturbation peut être réalisée en appliquant au microcircuit un ou plusieurs éclairages brefs ou un ou plusieurs pics de tension sur l'un de ses contacts.

Afin de lutter contre ces attaques variées par nature, de nombreuses solutions très différentes les unes des autres ont été apportées. L'invention concerne plus particulièrement celles qui visent à protéger des données lorsqu'elles circulent dans un microcircuit.

A cet effet, il est connu de chiffrer chaque donnée sensible à la sortie d'une mémoire ou d'un registre ou avant de la transmettre sur un bus de donnée, et de déchiffrer la donnée à l'entrée d'un registre ou d'une mémoire ou à sa réception par une entité destinatrice de la donnée. Il s'avère que cette solution n'apporte qu'une protection partielle aux données transmises, étant donné qu'entre la sortie du mécanisme de déchiffrement et l'entrée du registre ou de la mémoire, la donnée doit circuler dans des circuits tels que des portes logiques et des multiplexeurs qui produisent une signature visible par une attaque de type EMA ou SPA. L'opération d'écriture proprement dite dans la mémoire ou le registre peut également émettre une signature.

Il est également connu de précharger un registre devant recevoir une donnée sensible par une donnée générée aléatoirement pour changer l'état de certaines cellules de mémorisation, et ainsi modifier la signature émise lors de l'écriture dans le registre. Cette solution présente l'inconvénient de nécessiter une instruction supplémentaire pour réaliser le préchargement.

Le document WO 00/19385 A1 (KONINKL PHILIPS ELECTRONIC NV (NL), 6 avril 2000) décrit un procédé de transmission d'une donnée secrète, consistant à ajouter aux bits de la donnée secrète des bits supplémentaires de telle sorte que le nombre de bits à 1 transmis soit toujours le même, et à transmettre la donnée secrète avec les bits supplémentaires en une seule fois. A la réception, la donnée secrète est récupérée en sélectionnant parmi les bits transmis, les bits de la donnée secrète.

Un mode de réalisation concerne un procédé de contremesure dans un composant électronique dans lequel des données binaires sont transmises entre des unités de mémorisation de données binaires. Selon un mode de réalisation, une donnée binaire est transmise en plusieurs cycles de transmission d'une donnée modifiée, comportant un premier cycle comprenant des étapes consistant à : sélectionner aléatoirement des bits de la donnée à transmettre, chaque bit sélectionné ayant un rang aléatoire dans la donnée à transmettre, modifier la donnée à transmettre en remplaçant les bits non sélectionnés par des bits ayant une valeur choisie aléatoirement, et transmettre la donnée modifiée, un dernier cycle de transmission comprenant une étape de transmission d'une donnée modifiée comprenant des bits de la donnée à transmettre, n'ayant pas été transmis lors d'un cycle précédent.

Selon un mode de réalisation, la donnée binaire est transmise à une entrée de donnée d'un circuit de logique combinatoire du composant électronique, le dernier cycle comprenant la transmission de tous les bits de la donnée au circuit de logique combinatoire.

Selon un mode de réalisation, la donnée est transmise par une ligne de transmission du composant électronique, le dernier cycle comprenant la transmission de bits ayant chacun une valeur choisie aléatoirement, en remplacement des bits de la donnée non transmis au dernier cycle.

Selon un mode de réalisation, le premier cycle comprend une étape d'inversion des valeurs respectives de bits choisis aléatoirement parmi les bits de la donnée sélectionnés, avant leur transmission, et le dernier cycle comprend une étape d'inversion des valeurs respectives des bits de la donnée, ayant été inversés et transmis lors d'un cycle précédent.

Selon un mode de réalisation, le nombre de cycles de transmission de la donnée est égal à deux et le nombre de bits de la donnée transmis à chaque cycle est choisi aléatoirement au voisinage de la moitié des bits de la donnée.

Un mode de réalisation concerne également un dispositif de contremesure dans un composant électronique dans lequel des données binaires sont transmises entre des unités de mémorisation de données binaires. Selon un mode de réalisation, le dispositif est configuré pour mettre en oeuvre le procédé précédemment défini.

Selon un mode de réalisation, le dispositif comprend une unité d'embrouillage recevant une donnée à transmettre, et configurée pour modifier la donnée à transmettre en sélectionnant aléatoirement des bits de la donnée à transmettre, chaque bit sélectionné ayant un rang aléatoire dans la donnée à transmettre, remplacer les bits non sélectionnés par des bits ayant chacun une valeur choisie aléatoirement, et transmettre la donnée modifiée.

Selon un mode de réalisation, l'unité d'embrouillage est connectée à une ligne de transmission de donnée.

Selon un mode de réalisation, l'unité d'embrouillage est connectée à une entrée de donnée d'un circuit de logique combinatoire.

Selon un mode de réalisation, le dispositif comprend une unité de désembrouillage configurée pour recevoir des bits transmis par une ligne de transmission de donnée et reconstituer une donnée transmise à partir de bits transmis en plusieurs cycles de transmission d'une donnée modifiée, et une unité de contrôle des unités d'embrouillage et de désembrouillage.

Selon un mode de réalisation, l'unité d'embrouillage comprend une unité d'inversion de bits pour inverser les valeurs respectives des bits de la donnée à transmettre sélectionnés parmi des bits sélectionnés pour être transmis, l'unité de désembrouillage comprenant une unité d'inversion de bits pour inverser les valeurs respectives des bits d'une donnée transmise ayant été inversées par l'unité d'embrouillage lors d'un cycle de transmission précédent.

Un mode de réalisation concerne également un composant électronique, comprenant un dispositif de contremesure tel que précédemment défini.

Selon un mode de réalisation, le composant électronique comprend une ligne de transmission de donnée, le dispositif de contremesure comprenant des unités d'embrouillage et de désembrouillage connectées à la ligne de transmission de donnée.

Selon un mode de réalisation, le composant électronique comprend un circuit de logique combinatoire et une unité d'embrouillage connectée à une entrée de donnée du circuit de logique combinatoire.

Un mode de réalisation concerne également un dispositif portable à microcircuit, caractérisé en ce qu'il comprend un composant électronique tel que précédemment défini.

Des exemples de réalisation de l'invention seront décrits dans ce qui suit, à titre non limitatif en relation avec les figures jointes parmi lesquelles :
la figure 1 représente schématiquement un dispositif de contremesure pour protéger une liaison de donnée entre deux unités de stockage de donnée, selon un mode de réalisation,
la figure 2 représente schématiquement une partie émettrice et une partie réceptrice de donnée du dispositif de contremesure, selon un mode de réalisation
la figure 3A représente schématiquement une partie émettrice de donnée du dispositif de contremesure, selon un autre mode de réalisation,
la figure 3B représente schématiquement une partie réceptrice de donnée du dispositif de contremesure, correspondant à la partie émettrice de la figure 3A,
les figures 4A et 4B représentent schématiquement l'état du dispositif de protection durant deux cycles de transmission d'une donnée,
la figure 5 représente schématiquement un dispositif de contremesure pour protéger des données circulant dans un circuit de logique combinatoire entre des unités de stockage de donnée, selon un mode de réalisation,
la figure 6 représente un exemple de circuit logique protégé par le dispositif de contremesure de la figure 5.

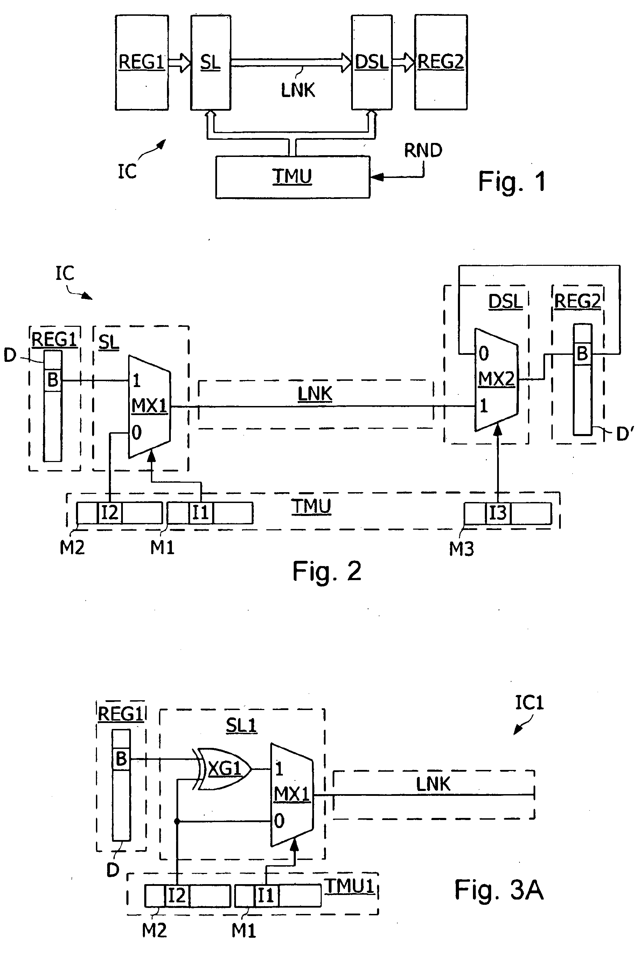

La figure 1 représente des unités émettrice REG1 et réceptrice REG2 de donnée, reliées par une liaison de transmission de donnée LNK, dans un composant électronique IC. Les unités REG1 et REG2 peuvent être par exemple des registres ou des mémoires. La liaison LNK est par exemple un bus de donnée.

Selon un mode de réalisation, le composant électronique IC comprend un dispositif de contremesure comportant une unité d'embrouillage SL, une unité de désembrouillage DSL et une unité de contrôle TMU des unités SL et DSL. L'unité SL est interposée sur la liaison LNK en sortie de l'unité REG1, et l'unité DSL est interposée sur la liaison LNK en entrée de l'unité REG2.

La figure 2 représente les unités d'embrouillage SL et de désembrouillage DSL, selon un mode de réalisation. L'unité d'embrouillage SL comprend pour chaque bit B d'une donnée D stockée dans l'unité REG1, et à transmettre par la liaison LNK, ou pour chaque ligne de transmission de la liaison LNK, un multiplexeur MX1 commandé par un bit I1 d'un premier mot de commande aléatoire M1 émis par l'unité de contrôle TMU. Le multiplexeur MX1 comprend une entrée reliée à une cellule de mémorisation du bit B dans l'unité REG1 et une autre entrée recevant un bit I2 d'un second mot de commande aléatoire M2 émis par l'unité de contrôle TMU. La sortie du multiplexeur MX1 est connectée à une ligne de transmission de bit de la liaison LNK. De cette manière, chaque bit B stocké dans l'unité REG1 est aléatoirement transmis par la liaison LNK ou remplacé par un bit I2 de valeur aléatoire qui est transmis à la place du bit B par la liaison LNK. L'unité TMU génère les mots de commande M1, M2 par exemple à partir d'un nombre aléatoire ou pseudo-aléatoire RND.

L'unité de désembrouillage DSL comprend pour chaque ligne de transmission de bit de la liaison LNK ou chaque cellule de mémorisation d'un bit de l'unité REG2 un multiplexeur MX2 commandé par un bit I3 d'un troisième mot de commande M3 émis par l'unité TMU. Le multiplexeur MX2 reçoit sur une entrée le bit transmis par la liaison LNK. Une autre entrée et la sortie du multiplexeur MX2 sont reliées à une cellule de mémorisation de bit de l'unité REG2. De cette manière, le multiplexeur MX2 peut être commandé pour soit mémoriser le bit B transmis par la liaison LNK dans une cellule de l'unité REG2, soit fournir en entrée de la cellule de l'unité REG2 le bit qui y était mémorisé.

L'unité TMU commande les unités SL et DSL pour transmettre une donnée D mémorisée dans l'unité REG1 en plusieurs cycles. A chaque cycle de transmission, l'unité TMU commande les multiplexeurs MX1 de l'unité SL par les bits I1 du mot aléatoire M1 pour transmettre une partie non déjà transmise lors d'un cycle précédent des bits B de la donnée D mémorisée dans l'unité REG1. Plus précisément, lors d'un premier cycle, les multiplexeurs MX1 de l'unité SL sont commandés par les bits I1 d'un mot de commande M1 émis par l'unité TMU pour transmettre une première partie de bits B de la donnée D mémorisée dans l'unité REG1. Les bits non transmis de la donnée D sont remplacés par des bits I2 du mot aléatoire M2 émis par l'unité TMU, qui sont transmis par la liaison LNK. Parallèlement, les multiplexeurs MX2 de l'unité DSL sont commandés par les bits I3 du mot M3 émis par l'unité TMU pour que tous les bits transmis soient stockés dans l'unité REG2. A la fin du premier cycle de transmission, l'unité REG2 contient une donnée D' constituée de la première partie des bits transmis de la donnée D et de bits I2 du mot M2.

Si la transmission d'une donnée est effectuée en deux cycles, l'unité TMU émet au second et dernier cycle un mot de commande M1 des multiplexeurs MX1 de l'unité SL, pour transmettre les bits de la donnée D qui n'ont pas été transmis au cycle précédent. A cet effet, chaque bit I1 du mot de commande M1 est égal à l'inverse du bit de même rang du mot de commande M1 ayant servi à commander les multiplexeurs MX1 au cycle de transmission précédent. Au second cycle, l'unité TMU émet un mot de commande M3 des multiplexeurs MX2 pour transmettre à l'unité REG2 tous les bits de la donnée D ayant été transmis durant ce dernier cycle et pour reboucler en entrée de l'unité REG2 tous les bits de la donnée D ayant été transmis lors du cycle précédent. A cet effet, le mot de commande M3 est égal au mot de commande M1 émis durant ce dernier cycle.

De cette manière, la transmission d'une donnée est effectuée avec deux composantes aléatoires, à savoir une composante aléatoire portant sur le choix des bits de la donnée transmis à chaque cycle de transmission, et une composante aléatoire portant sur la valeur des bits transmis à la place des bits non transmis de la donnée, à chaque cycle de transmission. Il en résulte que non seulement la signature électromagnétique ou de consommation électrique, d'une transmission de donnée est répartie sur plusieurs cycles de transmission, mais également la signature de chaque cycle de transmission dépend de valeurs de bits aléatoires I2 dont le rang dans la donnée transmise est également aléatoire.

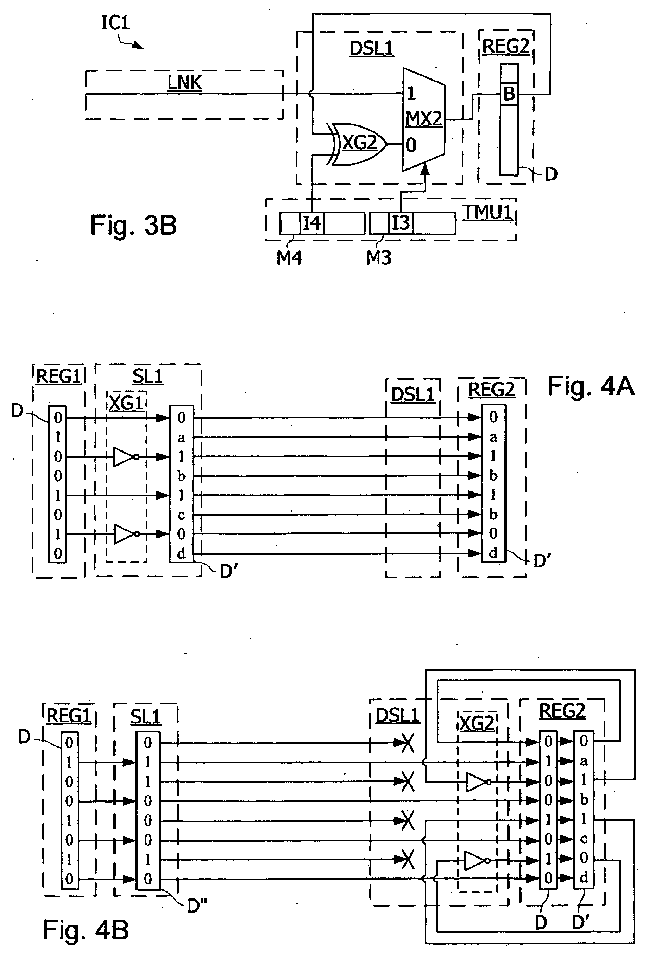

Les figures 3A et 3B représentent un dispositif de contremesure selon un autre mode de réalisation, comprenant des unités d'embrouillage SL1 et de désembrouillage DSL1, commandées par une unité de contrôle TMU1, pour protéger une liaison de transmission de donnée LNK dans un composant électronique IC1. Sur la figure 3A, l'unité d'embrouillage SL1 diffère de l'unité SL représentée sur la figure 2 en ce qu'elle comprend pour chaque bit B d'une donnée stockée par l'unité REG1 ou à transmettre par la liaison LNK, ou chaque ligne de transmission de bit de la liaison LNK une porte logique de type OU Exclusif (XOR) XG1 interposée entre la sortie de l'unité REG1 et l'entrée du multiplexeur MX1. La porte XG1 reçoit ainsi en entrée le bit B de l'unité REG1, ainsi qu'un bit de valeur aléatoire fourni par l'unité TMU1 par exemple choisi égal au bit I2 correspondant du mot de commande M2. La sortie de la porte XG1 est connectée à une entrée du multiplexeur MX1. La porte XG1 transmet ainsi au multiplexeur MX1 un bit B de la donnée D, inversé ou non selon la valeur du bit I2.

Sur la figure 3B, l'unité de désembrouillage DSL1 diffère de l'unité DSL représentée sur la figure 2B en ce qu'elle comprend pour chaque bit B d'une donnée transmise à l'unité REG2 ou chaque ligne de transmission de bit de la liaison LNK une porte logique de type OU Exclusif (XOR) XG2 interposée entre la sortie et l'entrée de l'unité REG2. Une entrée de la porte XG2 reçoit de l'unité TMU1 un bit I4 d'un mot de commande M4. De cette manière, un bit de donnée D transmis sous forme inversée lors d'un premier cycle peut à nouveau être inversé lors d'un cycle de transmission suivant.

Les figures 4A et 4B représentent un exemple d'état du dispositif de contremesure SL1, DSL1, TMU1 lors de deux cycles de transmission d'une donnée D, dans le cas où la donnée est entièrement transmise en deux cycles de transmission.

Sur la figure 4A représentant le dispositif de contremesure lors du premier cycle de transmission, la donnée D dans l'unité REG1 est par exemple égale à "01001010". Les multiplexeurs MX1 de l'unité SL1 sont commandés par un mot de commande M1 égal à "10101010". Le mot de commande M2 fourni à l'unité SL1 est égal à"0a1b0c1d", a, b, c et d étant des bits de valeur quelconque aléatoire. Les multiplexeurs MX2 de l'unité DSL1 sont commandés par un mot de commande M3 égal à "11111111" pour que tous les bits transmis par la liaison LNK soient transférés dans l'unité REG2. Le mot de commande M4 fourni par l'unité TMU1 à l'unité DSL1 présente une valeur quelconque qui n'est pas utilisée puisque tous les bits du mot M3 sont à 1. Il en résulte que le premier bit égal à 0 de la donnée D est transmis à l'unité REG2 sans changement, la valeur aléatoire "a" est transmise à la place du second bit de la donnée D, le troisième bit est transmis sous forme inversée égale à 1, la valeur aléatoire "b" est transmise à la place du quatrième bit, le cinquième bit est transmis sans changement, la valeur aléatoire "c" est transmise à la place du sixième bit, le septième bit est transmis sous forme inversée égale à 0, et la valeur aléatoire "d" est transmise à la place du sixième bit, le huitième bit. Une donnée D' égale à "0a1b1c0d" est ainsi transmise au premier cycle en remplacement de la donnée D et mémorisée dans le registre REG2.

Au second et dernier cycle de transmission illustré par la figure 4B, les multiplexeurs MX1 sont commandés par un mot de commande M̅1̅ égal à l'inverse du mot de commande M1 fourni au premier cycle de transmission, soit "01010101". De cette manière, les bits de la donnée D non transmis au premier cycle de transmission peuvent être transmis au second cycle de transmission. L'unité SL1 reçoit également le mot de commande M2 émis par l'unité TMU1 lors du premier cycle de transmission. Il en résulte que les bits du mot M2 ayant servi à commander les portes XG1 sont transmis en remplacement des bits de la donnée D qui ont été transmis au premier cycle de transmission. Il en résulte qu'une donnée D" égale à "01100010" est transmise au second cycle de transmission. Les multiplexeurs MX2 de l'unité DSL1 sont commandés par un mot de commande M3 égal au mot de commande M1 émis durant le second cycle de transmission, pour que tous les bits, et seulement ceux-ci, de la donnée D transmis par la liaison LNK à ce cycle soient transférés dans l'unité REG2. Le mot de commande M4 fourni par l'unité TMU1 à l'unité DSL1 est égal au mot de commande M2 émis au premier cycle et à ce cycle de transmission, pour que tous les bits de la donnée D ayant été transmis sous forme inversée au premier cycle soient à nouveau inversés avant d'être fournis à l'entrée de l'unité REG2. Il en résulte que le premier bit égal à 0 dans l'unité REG2 est réintroduit sans changement dans l'unité REG2, en remplacement du premier bit transmis égal à 0 de la donnée D", le second bit égal à 1 de la donnée D est transmis sans changement à l'unité REG2, le troisième bit égal à 1 dans l'unité REG2 est réintroduit sous forme inversée dans l'unité REG2, en remplacement du troisième bit transmis égal à 1 de la donnée D", le quatrième bit égal à 0 est transmis sans changement à l'unité REG2, le cinquième bit égal à 1 dans l'unité REG2 est réintroduit sans changement dans l'unité REG2, en remplacement du cinquième bit transmis égal à 0 de la donnée D", le sixième bit égal à 0 est transmis sans changement à l'unité REG2, le septième bit égal à 0 dans l'unité REG2 est réintroduit sous forme inversée dans l'unité REG2, en remplacement du septième bit transmis égal à 1 de la donnée D", et le huitième bit égal à 0 est transmis sans changement à l'unité REG2. La donnée D se trouve ainsi dans l'unité REG2 à l'issue du second cycle de transmission.

En plus des composantes aléatoires introduites par le mode de réalisation de la figure 2, le mode de réalisation des figures 3A et 3B ajoute une double inversion de bits choisis aléatoirement parmi les bits de la donnée transmise D, ces deux inversions étant réalisées sur deux cycles de transmission. Cette disposition contribue à masquer davantage la signature émise par la transmission d'une donnée.

Il est à noter que les bits n'appartenant pas à la donnée qui sont transmis au second cycle peuvent être choisis aléatoirement au lieu de correspondre aux bits du mot de commande M2 émis par l'unité TMU1 au premier cycle de transmission.

Dans l'exemple des figures 4A et 4B, la moitié des bits de la donnée D à transmettre sont transmis à chacun des deux cycles de transmission. Bien entendu, le nombre de bits transmis à chaque cycle n'est pas nécessairement constant, mais peut varier d'un ou quelques bits, sachant que le masquage de la signature de la transmission d'une donnée n'est pas optimum si tous les bits d'une donnée sauf un ou deux bits sont transmis en un cycle. En pratique, si le nombre de cycles de transmission est égal à deux, le nombre de bits de donnée transmis à chaque cycle peut être voisin de la moitié des bits de la donnée. Plus généralement, si n est le nombre de cycles de transmission, le nombre de bits de donnée transmis à chaque cycle peut être voisin du nombre de bits de la donnée divisé par n.

Bien entendu, le procédé de contremesure décrit s'applique à des données ne comportant pas nécessairement 8 bits comme dans les exemples des figures 4A et 4B, mais peut aussi s'appliquer à des données ayant un nombre de bits inférieur ou supérieur.

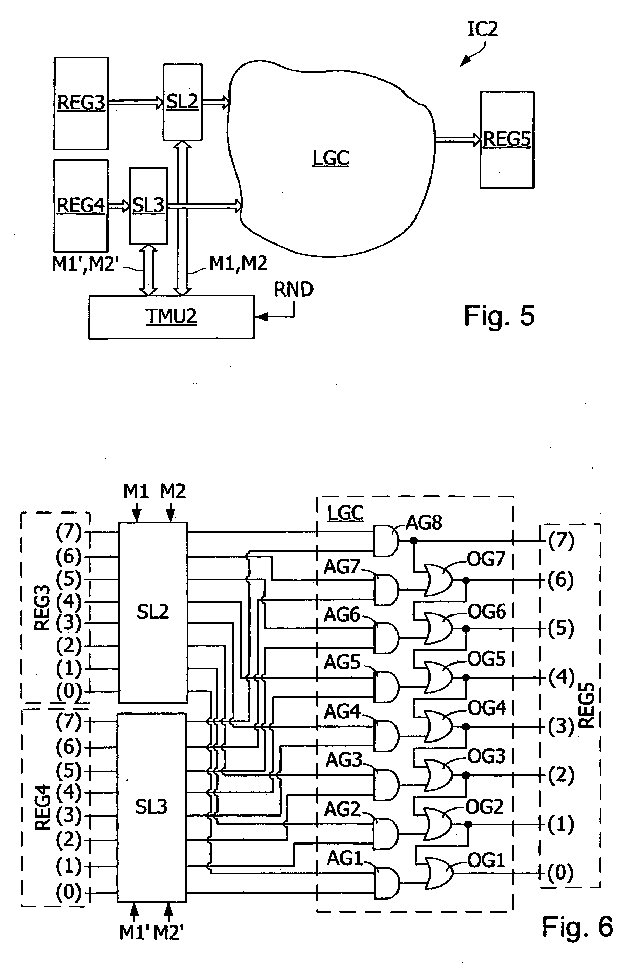

Certains mécanismes mis en oeuvre dans les dispositifs de contremesure précédemment décrits peuvent également être mis en oeuvre pour protéger des données circulant dans un circuit de logique combinatoire. Ainsi, la figure 5 représente un composant électronique IC2 comprenant un circuit de logique combinatoire LGC associé en entrée à des unités de mémorisation de donnée REG3, REG4 et en sortie à une unité de mémorisation REG5. Les unités REG3, REG4 et REG5 peuvent être des registres ou des emplacements de mémorisation de donnée dans des mémoires. Selon un mode de réalisation, le composant électronique IC2 comprend un dispositif de contremesure comportant une unité d'embrouillage SL2, SL3 par unité d'entrée REG4, REG5 d'entrée du circuit LCG et une unité de contrôle d'embrouillage TMU2 commandant chaque unité d'embrouillage SL2, SL3. L'unité TMU2 est configurée pour commander les unités SL2, SL3 de manière à remplacer, lors d'un premier cycle de traitement réalisé par le circuit LCG, certains bits choisis aléatoirement dans les unités d'entrée REG3, REG4, par des bits de valeurs également choisies aléatoirement, et pour transmettre au circuit LGC au cours d'un ou plusieurs cycles suivants les bits des unités REG3, REG4 non transmis au(x) précédent(s) cycle(s), avec les bits déjà transmis au(x) cycles précédent(s). Tous les bits dés données dans les unités d'entrée sont ainsi transmis simultanément au circuit LGC, au dernier cycle de transmission. De cette manière, les portes logiques du circuit LGC changent d'état partiellement à chaque cycle, au lieu de changer d'état en un cycle en fonction des valeurs des données mémorisées dans les registres d'entrée.

Pour sélectionner les bits des données mémorisées dans les unités d'entrée REG3, REG4 à transmettre au circuit LGC à chaque cycle, chacune des unités d'embrouillage SL2, SL3 peut être réalisée conformément à l'unité SL représentée sur la figure 2. Chaque unité SL2, SL3 est commandée par un mot de commande M1, M1' émis par l'unité TMU2 pour sélectionner les bits à émettre de la donnée mémorisée dans l'unité d'entrée à laquelle elle est connectée. Chaque unité SL2, SL3 reçoit également un mot de commande M2, M2' contenant les bits à émettre en remplacement des bits non émis de la donnée mémorisée dans l'unité SL2, SL3. Les mots de commande M1, M1' des unités SL2, SL3 peuvent être identiques ou différents. Egalement, les nombres de bits de donnée sélectionnés à chaque cycle dans chaque unité d'entrée REG3, REG4 (c'est-à-dire les nombres de bits par exemple à 1 dans les mots de commande M1 et M'1) peuvent être identiques ou différents. De même, les bits aléatoires (appartenant aux mots de commande M2 et M2') transmis en remplacement des bits non transmis des unités REG3, REG4 peuvent être identiques ou différents. Par ailleurs, seules certaines des entrées de donnée du circuit logique LGC peuvent être équipées d'une unité d'embrouillage.

La figure 6 représente un exemple de circuit logique LCG pouvant être protégé par le dispositif de contremesure précédemment décrit. Le circuit LGC est relié aux unités d'entrée REG3, REG4 par exemple de type registre à huit bits, par l'intermédiaire des unités d'embrouillage SL2, SL3. Le circuit LGC est connecté à l'unité de sortie REG5, également de type registre à huit bits.

Le circuit LGC comprend huit portes logiques de type ET AG1-AG8 et sept portes logiques de type OU OG1-OG7. Chaque porte AG1-AG8 reçoit un bit du registre REG3 et un bit de même rang du registre REG4. La sortie de chaque porte ET AGi est connectée à une entrée d'une des portes OU OGi respective de même rang i (i étant un nombre entier variant de 1 à 7) et la sortie de la porte AG8 est connectée à une autre entrée de la porte OG7. La sortie de chaque porte OGi fournit un bit de sortie du circuit LGC qui est mémorisé dans l'unité de sortie REG5, les sorties des portes OG2 à OG7 étant connectées respectivement à une autre entrée des portes OG6 à OG1.

Au début d'un premier cycle de calcul, les registres REG3, REG4 contiennent par exemple les données binaires "01001010" et "11100101". Les mots de commande M1 et M1' sont par exemple égaux à "11001100" et "01001010". Il en résulte que les données appliquées en entrée du circuit LGC sont égales à : "01ab10cd" et "e1fg0h1j", a, b, c, d, e, f, g, h, j étant des bits de valeurs aléatoires issus des mots de commande M2 et M2'. A la fin du premier cycle, le registre REG5 contient le mot "11klmnop", k, l, m, n, o et p étant bits calculés à partir des valeurs aléatoires introduites par les unités SL2 et SL3. Au second et dernier cycle, les mots M1 et M1' sont tous les deux égaux à "11111111" de sorte que tous les bits mémorisés dans les registres REG3 et REG4 sont introduits dans le circuit LGC. A la fin du second cycle, le registre REG5 contient la donnée "11000000". A l'issue du premier cycle, seules certaines portes logiques du circuit LGC ont atteint leur état final, tandis que les autres portes logiques n'atteignent leur état final qu'à l'issue du second cycle.

Ici encore, le nombre de cycles de transmission des bits des données d'entrée au circuit logique peut être supérieur à deux, et le nombre de bits des données d'entrée transmis au circuit logique à chaque cycle n'est pas nécessairement constant.

Il apparaîtra clairement à l'homme de l'art que la présente invention est susceptible de diverses variantes de réalisation et diverses applications. En particulier, l'invention n'est pas limitée aux circuits représentés sur les figures 2, 3A et 3B mis en oeuvre avec la liaison LNK de la figure 1 ou le circuit logique de la figure 5 ou 6. Tous autres circuits assurant des fonctions analogues, à savoir bloquer une partie des bits d'une ou plusieurs données d'être émises, et reconstituer la donnée émise à la réception lors du dernier cycle, peuvent convenir. Ainsi, le multiplexeur MUX1 sur les figures 2 et 3A peut être remplacé par exemple par une porte logique de type ET, et le multiplexeur MUX2 sur les figures 2 et 3B remplacé par une porte logique de type OU. Des bits à 0 sont alors émis à la place des bits d'une donnée D non émis à chaque cycle de transmission. Au dernier cycle, les portes OU reconstituent la donnée D en combinant les bits émis à ce cycle avec les bits émis aux cycles précédents. Le multiplexeur MUX1 sur les figures 2 et 3A peut être également remplacé par une porte logique de type OU, et le multiplexeur MUX2 sur les figures 2 et 3B remplacé par une porte logique de type ET. Des bits à 1 sont alors émis à la place des bits d'une donnée D non émis à chaque cycle de transmission. Au dernier cycle, les portes ET reconstituent la donnée D en combinant les bits émis à ce cycle avec les bits émis aux cycles précédents.

## Revendications

1. Procédé de contremesure dans un composant électronique (IC, IC1, IC2) dans lequel des données binaires sont transmises entre des unités de mémorisation de données binaires,
**caractérisé en ce qu'**une donnée binaire (D) est transmise en plusieurs cycles de transmission d'une donnée modifiée, comportant un premier cycle comprenant des étapes consistant à :
sélectionner aléatoirement des bits (B) de la donnée à transmettre, chaque bit sélectionné ayant un rang aléatoire dans la donnée à transmettre,
modifier la donnée à transmettre en remplaçant les bits non sélectionnés par des bits ayant une valeur choisie aléatoirement, et
transmettre la donnée modifiée,
un dernier cycle de transmission comprenant une étape de transmission d'une donnée modifiée comprenant des bits de la donnée à transmettre, n'ayant pas été transmis lors d'un cycle précédent.

2. Procédé selon la revendication 1, dans lequel la donnée binaire (D) est transmise à une entrée de donnée d'un circuit de logique combinatoire (LGC) du composant électronique (IC2), le dernier cycle comprenant la transmission de tous les bits de la donnée (D) au circuit de logique combinatoire.

3. Procédé selon la revendication 1, dans lequel la donnée (D) est transmise par une ligne de transmission (LNK) du composant électronique (IC, IC1), le dernier cycle comprenant la transmission de bits (I2) ayant chacun une valeur choisie aléatoirement, en remplacement des bits de la donnée non transmis au dernier cycle.

4. Procédé selon la revendication 3, dans lequel le premier cycle comprend une étape d'inversion des valeurs respectives de bits choisis aléatoirement parmi les bits de la donnée (D) sélectionnés, avant leur transmission, et le dernier cycle comprend une étape d'inversion des valeurs respectives des bits de la donnée, ayant été inversés et transmis lors d'un cycle précédent.

5. Procédé selon l'une des revendications 1 à 4, dans lequel le nombre de cycles de transmission de la donnée (D) est égal à deux et le nombre de bits de la donnée transmis à chaque cycle est choisi aléatoirement au voisinage de la moitié des bits de la donnée.

6. Dispositif de contremesure dans un composant électronique (IC, IC1, IC2) dans lequel des données binaires sont transmises entre des unités de mémorisation de données binaires,
**caractérisé en ce qu'**il est configuré pour mettre en oeuvre le procédé selon l'une des revendications 1 à 5.

7. Dispositif selon la revendication 6, comprenant une unité d'embrouillage (SL, SL1, SL2, SL3) recevant une donnée à transmettre, et configurée pour modifier la donnée à transmettre en sélectionnant aléatoirement des bits (B) de la donnée à transmettre (D), chaque bit sélectionné ayant un rang aléatoire dans la donnée à transmettre, remplacer les bits non sélectionnés par des bits (I2) ayant chacun une valeur choisie aléatoirement, et transmettre la donnée modifiée.

8. Dispositif selon la revendication 6 ou 7, dans lequel l'unité d'embrouillage (SL, SL1) est connectée à une ligne de transmission de donnée (LNK).

9. Dispositif selon la revendication 6 ou 7, dans lequel l'unité d'embrouillage (SL2, SL3) est connectée à une entrée de donnée d'un circuit de logique combinatoire (LGC).

10. Dispositif selon l'une des revendications 6 à 8, comprenant une unité de désembrouillage (DSL, DSL1) configurée pour recevoir des bits transmis par une ligne de transmission de donnée (LNK) et reconstituer une donnée transmise (D) à partir de bits transmis en plusieurs cycles de transmission d'une donnée modifiée, et une unité de contrôle (TMU, TMU1) des unités d'embrouillage et de désembrouillage.

11. Dispositif selon la revendication 10, dans lequel l'unité d'embrouillage (SL1) comprend une unité d'inversion de bits (XG1) pour inverser les valeurs respectives des bits de la donnée à transmettre sélectionnés parmi des bits sélectionnés pour être transmis, l'unité de désembrouillage (DSL1) comprenant une unité d'inversion de bits (XG2) pour inverser les valeurs respectives des bits d'une donnée transmise ayant été inversées par l'unité d'embrouillage lors d'un cycle de transmission précédent.

12. Composant électronique, **caractérisé en ce qu'**il comprend un dispositif de contremesure selon l'une des revendications 6 à 11.

13. Composant électronique selon la revendication 12, comprenant une ligne de transmission de donnée (LNK), le dispositif de contremesure comprenant des unités d'embrouillage (SL, SL1) et de désembrouillage (DSL, DSL1) connectées à la ligne de transmission de donnée.

14. Composant électronique selon la revendication 12 ou 13, comprenant un circuit de logique combinatoire (LGC) et une unité d'embrouillage connectée à une entrée de donnée du circuit de logique combinatoire.

15. Dispositif portable à microcircuit, **caractérisé en ce qu'**il comprend un composant électronique (IC, IC1, IC2) selon l'une des revendications 12 à 14.

## Patentansprüche

1. Gegenmessverfahren in einem elektronischen Bauteil (IC, IC1, IC2), wobei Bitdaten zwischen Bitdaten-Speichereinheiten übertragen werden,
**dadurch gekennzeichnet, dass** ein Bitdatenwert (D) in mehreren Übertragungszyklen eines geänderten Datenwerts übertragen wird, die einen ersten Zyklus aufweisen, der Schritte enthält, die darin bestehen:
Bits (B) des zu übertragenden Datenwerts zufällig auszuwählen, wobei jedes ausgewählte Bit einen Zufallsrang im zu übertragenden Datenwert hat;
den zu übertragenden Datenwert zu ändern, indem die nicht ausgewählten Bits durch Bits ersetzt werden, die einen zufällig gewählten Wert haben, und
den geänderten Datenwert zu übertragen,
wobei ein letzter Übertragungszyklus einen Schritt der Übertragung eines geänderten Datenwerts enthält, der Bits des zu übertragenden Datenwerts enthält, die nicht bei einem vorhergehenden Zyklus übertragen wurden.

2. Verfahren nach Anspruch 1, wobei der Bitdatenwert (D) an einen Datenwerteingang einer kombinatorischen Logikschaltung (LGC) des elektronischen Bauteils (IC2) übertragen wird, wobei der letzte Zyklus die Übertragung aller Bits des Datenwerts (D) an die kombinatorische Logikschaltung enthält.

3. Verfahren nach Anspruch 1, wobei der Datenwert (D) durch eine Übertragungsleitung (LNK) des elektronischen Bauteils (IC, IC1) übertragen wird, wobei der letzte Zyklus die Übertragung von Bits (I2), die je einen zufällig gewählten Wert haben, als Ersatz der im letzten Zyklus nicht übertragenen Bits des Datenwerts enthält.

4. Verfahren nach Anspruch 3, wobei der erste Zyklus einen Invertierungsschritt der jeweiligen Werte von zufällig unter den ausgewählten Bits des Datenwerts (D) gewählten Bits vor ihrer Übertragung enthält, und der letzte Zyklus einen Invertierungsschritt der jeweiligen Werte der Bits des Datenwerts enthält, die in einem vorhergehenden Zyklus invertiert und übertragen wurden.

5. Verfahren nach einem der Ansprüche 1 bis 4, wobei die Anzahl von Übertragungszyklen des Datenwerts (D) gleich zwei ist, und die Anzahl von in jedem Zyklus übertragenen Bits des Datenwerts zufällig in der Nähe der Hälfte der Bits des Datenwerts gewählt wird.

6. Gegenmessvorrichtung in einem elektronischen Bauteil (IC, IC1, IC2), wobei Bitdaten zwischen Bitdaten-Speichereinheiten übertragen werden, **dadurch gekennzeichnet, dass** sie konfiguriert ist, das Verfahren nach einem der Ansprüche 1 bis 5 anzuwenden.

7. Vorrichtung nach Anspruch 6, die eine Verwürfelungseinheit (SL, SL1, SL2, SL3) enthält, die einen zu übertragenden Datenwert empfängt und konfiguriert ist, den zu übertragenden Datenwert zu ändern, indem Bits (B) des zu übertragenden Datenwerts (D) zufällig ausgewählt werden, wobei jedes ausgewählte Bit einen Zufallsrang im zu übertragenden Datenwert hat, die nicht ausgewählten Bits durch Bits (I2) zu ersetzen, die je einen zufällig gewählten Wert haben, und den geänderten Datenwert zu übertragen.

8. Vorrichtung nach Anspruch 6 oder 7, wobei die Verwürfelungseinheit (SL, SL1) mit einer Datenwert-Übertragungsleitung (LNK) verbunden ist.

9. Vorrichtung nach Anspruch 6 oder 7, wobei die Verwürfelungseinheit (SL2, SL3) mit einem Datenwerteingang einer kombinatorischen Logikschaltung (LGC) verbunden ist.

10. Vorrichtung nach einem der Ansprüche 6 bis 8, die eine Entwürfelungseinheit (DSL, DSL1), die konfiguriert ist, von einer Datenwert-Übertragungsleitung (LNK) übertragene Bits zu empfangen und einen übertragenen Datenwert (D) ausgehend von Bits wiederherzustellen, die in mehreren Übertragungszyklen eines geänderten Datenwerts übertragen wurden, und eine Steuereinheit (TMU, TMU1) der Verwürfelungs- und Entwürfelungseinheiten enthält.

11. Vorrichtung nach Anspruch 10, wobei die Verwürfelungseinheit (SL1) eine Bitinvertierungseinheit (XG1) enthält, um die jeweiligen Werte der Bits des zu übertragenden Datenwerts zu invertieren, die aus zur Übertragung ausgewählten Bits ausgewählt wurden, wobei die Entwürfelungseinheit (DSL1) eine Bitinvertierungseinheit (XG2) enthält, um die jeweiligen Werte der Bits eines übertragenen Datenwerts zu invertieren, die von der Verwürfelungseinheit in einem vorhergehenden Übertragungszyklus invertiert wurden.

12. Elektronisches Bauteil, **dadurch gekennzeichnet, dass** es eine Gegenmessvorrichtung nach einem der Ansprüche 6 bis 11 enthält.

13. Elektronisches Bauteil nach Anspruch 12, das eine Datenwert-Übertragungsleitung (LNK) enthält, wobei die Gegenmessvorrichtung Verwürfelungs- (SL, SL1) und Entwürfelungseinheiten (DSL, DSL1) enthält, die mit der Datenwert-Übertragungsleitung verbunden sind.

14. Elektronisches Bauteil nach Anspruch 12 oder 13, das eine kombinatorische Logikschaltung (LGC) und eine Verwürfelungseinheit enthält, die mit einem Datenwerteingang der kombinatorischen Logikschaltung verbunden ist.

15. Tragbare Vorrichtung mit Mikroschaltkreis, **dadurch gekennzeichnet, dass** sie ein elektronisches Bauteil (IC, IC1, IC2) nach einem der Ansprüche 12 bis 14 enthält.

## Claims

1. Countermeasure method in an electronic component (IC, IC1, IC2) in which binary data are transmitted between binary data storage units,
**characterized in that** a binary datum (D) is transmitted in several cycles of transmission of a modified datum, comprising a first cycle comprising steps consisting in:
randomly selecting bits (B) of the datum to be transmitted, each selected bit having a random rank in the datum to be transmitted,
modifying the datum to be transmitted by replacing the bits not selected with bits having a randomly chosen value, and
transmitting the modified datum,
a last transmission cycle comprising a step of transmitting a modified datum comprising bits of the datum to be transmitted that were not transmitted during a previous cycle.

2. Method according to Claim 1, in which the binary datum (D) is transmitted to a datum input of a combinatorial logic circuit (LGC) of the electronic component (IC2), the last cycle comprising the transmission of all the bits of the datum (D) to the combinatorial logic circuit.

3. Method according to Claim 1, in which the datum (D) is transmitted by a transmission line (LNK) of the electronic component (IC, IC1), the last cycle comprising the transmission of bits (I2) each having a randomly chosen value, in replacement of the bits of the datum that were not transmitted in the last cycle.

4. Method according to Claim 3, in which the first cycle comprises a step of inverting the respective values of bits chosen randomly from among the bits of the datum (D) that were selected, before their transmission, and the last cycle comprises a step of inverting the respective values of the bits of the datum that were inverted and transmitted during a previous cycle.

5. Method according to one of Claims 1 to 4, in which the number of cycles of transmission of the datum (D) is equal to two and the number of bits of the datum that are transmitted in each cycle is chosen randomly in the vicinity of half the bits of the datum.

6. Countermeasure device in an electronic component (IC, IC1, IC2) in which binary data are transmitted between binary data storage units,
**characterized in that** it is configured to implement the method according to one of Claims 1 to 5.

7. Device according to Claim 6, comprising a scrambling unit (SL, SL1, SL2, SL3) receiving a datum to be transmitted, and configured to modify the datum to be transmitted by randomly selecting bits (B) of the datum to be transmitted (D), each selected bit having a random rank in the datum to be transmitted, to replace the bits not selected with bits (I2) each having a randomly chosen value, and to transmit the modified datum.

8. Device according to Claim 6 or 7, in which the scrambling unit (SL, SL1) is connected to a datum transmission line (LNK).

9. Device according to Claim 6 or 7, in which the scrambling unit (SL2, SL3) is connected to a datum input of a combinatorial logic circuit (LGC).

10. Device according to one of Claims 6 to 8, comprising a descrambling unit (DSL, DSL1) configured to receive bits transmitted by a datum transmission line (LNK) and to reconstruct a transmitted datum (D) on the basis of bits transmitted in several cycles of transmission of a modified datum, and a control unit (TMU, TMU1) for the scrambling and descrambling units.

11. Device according to Claim 10, in which the scrambling unit (SL1) comprises a bits inversion unit (XG1) for inverting the respective values of the bits of the datum to be transmitted that were selected from among bits selected for transmission, the descrambling unit (DSL1) comprising a bits inversion unit (XG2) for inverting the respective values of the bits of a transmitted datum that were inverted by the scrambling unit during a previous transmission cycle.

12. Electronic component, **characterized in that** it comprises a countermeasure device according to one of Claims 6 to 11.

13. Electronic component according to Claim 12, comprising a datum transmission line (LNK), the countermeasure device comprising scrambling units (SL, SL1) and descrambling units (DSL, DSL1) connected to the datum transmission line.

14. Electronic component according to Claim 12 or 13, comprising a combinatorial logic circuit (LGC) and a scrambling unit which is connected to a datum input of the combinatorial logic circuit.

15. Portable microcircuit device, **characterized in that** it comprises an electronic component (IC, IC1, IC2) according to one of Claims 12 to 14.
